# EUROPÄISCHE PATENTSCHRIFT

(11) **EP 3 900 980 B1**
(45) Veröffentlichungstag und Bekanntmachung des Hinweises auf die Patenterteilung: **07.12.2022**
(21) Anmeldenummer: 20171380.7
(22) Anmeldetag: 24.04.2020
(51) Int. Cl.: B60Q 1/00, B60Q 1/26, F21S 43/14, F21S 43/145, F21S 43/19, F21S 43/20, F21S 43/31, F21S 43/33, F21S 43/40, F21S 43/50

(54) **FAHRZEUGLEUCHTE**
VEHICLE LIGHT
FEU DE VÉHICULE

(43) Veröffentlichungstag der Anmeldung: 27.10.2021
(73) Patentinhaber: odelo GmbH, 70329 Stuttgart (DE)
(72) Erfinder: VOLLMER, Marco, 73728 Esslingen (DE)
(74) Vertreter: Benninger, Johannes

(56) Entgegenhaltungen:
- EP-A1- 3 106 348
- CN-A- 107 883 341
- DE-A1-102012 019 941
- DE-A1-102014 009 612
- DE-A1-102015 216 746
- FR-A1- 3 007 821
- US-A1- 2016 178 152

## Beschreibung

Die Erfindung betrifft eine Fahrzeugleuchte gemäß dem Oberbegriff des Anspruchs 1.

Eine Fahrzeugleuchte umfasst beispielsweise einen im Wesentlichen von einem Leuchtengehäuse und einer Lichtscheibe umschlossenen Leuchteninnenraum und mindestens ein darin beherbergtes, mindestens eine Lichtquelle umfassendes Leuchtmittel für wenigstens eine Lichtfunktion der Fahrzeugleuchte.

Das Leuchtengehäuse beziehungsweise der Leuchteninnenraum kann in mehrere Kammern mit jeweils eigenen Lichtquellen und/oder Leuchtmitteln und/oder Optikelementen sowie gegebenenfalls Lichtscheiben unterteilt sein, von denen mehrere Kammern gleiche und/oder jede Kammer eine andere Lichtfunktionen erfüllen kann.

Beispiele für Fahrzeugleuchten sind am Fahrzeugbug, an den Fahrzeugflanken und/oder an den Seitenspiegeln sowie am Fahrzeugheck angeordnete Wiederholblinkleuchten, Ausstiegsleuchten, beispielsweise zur Umfeldbeleuchtung, Begrenzungsleuchten, Bremsleuchten, Nebelleuchten, Rückfahrleuchten, sowie typischerweise hoch gesetzte dritte Bremsleuchten, so genannte Central, High-Mounted Braking Lights, Tagfahrleuchten, Scheinwerfer und auch als Abbiege- oder Kurvenlicht verwendete Nebelscheinwerfer, sowie Kombinationen hiervon.

Eine solche Kombination ist beispielsweise regelmäßig in den bekannten Heckleuchten verwirklicht. In diesen kommen beispielsweise Wiederholblinkleuchten, Begrenzungsleuchten, Bremsleuchten, Nebelleuchten sowie Rückfahrleuchten zum Einsatz, um nur eine von vielen in Heckleuchten verwirklichten Kombinationen zu nennen. Weder erhebt diese Aufzählung Anspruch auf Vollständigkeit, noch bedeutet dies, dass in einer Heckleuchte alle genannten Leuchten kombiniert werden müssen. So können beispielsweise auch nur zwei oder drei der genannten oder auch anderer Leuchten in einem gemeinsamen Leuchtengehäuse einer Heckleuchte miteinander kombiniert sein.

Jede Fahrzeugleuchte, insbesondere Automobilleuchte, erfüllt je nach Ausgestaltung eine oder mehrere Aufgaben beziehungsweise Funktionen. Zur Erfüllung jeder Aufgabe beziehungsweise Funktion ist eine Lichtfunktion der Fahrzeugleuchte vorgesehen. Lichtfunktionen sind beispielsweise bei einer Ausgestaltung als Scheinwerfer eine die Fahrbahn ausleuchtende Funktion, oder bei einer Ausgestaltung als Signalleuchte eine Signalfunktion, wie beispielsweise eine Wiederholblinklichtfunktion zur Fahrtrichtungsanzeige und/oder zur Warnung anderer Verkehrsteilnehmer oder eine Bremslichtfunktion zur Anzeige einer Bremstätigkeit, oder beispielsweise einer Begrenzungslichtfunktion, wie etwa einer Schluss- oder Rücklichtfunktion, zur Sicherstellung einer Sichtbarkeit des Fahrzeugs bei Tag und/oder Nacht, wie etwa bei einer Ausgestaltung als Heckleuchte oder Tagfahrleuchte.

Jede Lichtfunktion muss dabei eine beispielsweise gesetzlich vorgegebene Lichtverteilung erfüllen. Die Lichtverteilung legt dabei mindestens einzuhaltende, umgangssprachlich als Helligkeit bezeichnete Lichtströme in zumindest einzuhaltenden Raumwinkelbereichen fest.

Für die einzelnen Lichtfunktionen sind zum Teil unterschiedliche Helligkeiten bzw. Sichtweiten sowie zum Teil unterschiedliche Lichtfarben zugeordnet.

Beim Blick von außerhalb des Leuchteninnenraums auf die Lichtscheibe oder durch diese hindurch wird jede Lichtfunktion durch mindestens eine kurz als Leuchtfläche bezeichnete, leuchtende Fläche derart verwirklicht, dass jeder Lichtfunktion während deren momentaner Erfüllung mindestens eine Leuchtfläche zur Verfügung steht.

Aufgrund der für die verschiedenen Lichtfunktionen von insbesondere als Heckleuchten ausgeführten Automobilleuchten vorgesehenen, teils unterschiedlichen Lichtfarben und deren zumindest teilweise unterschiedlicher Lichtverteilungen wird einer jeden Lichtfunktion meist eine eigene Leuchtfläche zugeordnet.

Dies hat einen hohen Bauraumbedarf zur Folge, weil für jede Lichtfunktion, auch für solche, die momentan nicht benötigt werden, eine eigene Leuchtfläche bereit gehalten werden muss.

Ein generelles Ziel bei der Entwicklung von Fahrzeugkomponenten, wie etwa Fahrzeugleuchten, sind ein geringer Bauraumbedarf einhergehend mit einer Gewichtseinsparung, die sich darüber hinaus kostensenkend auf die Herstellungskosten auswirken.

Darüber hinaus sollen Lichtfunktionen in den Leuchten quasi unsichtbar oder versteckt ausgeführt werden, sodass ein Überraschungseffekt bei deren Aktivierung entsteht. Die jeweilige betroffene Lichtfunktion verfügt hierdurch über eine erhöhte Wahrnehmungskraft, einhergehend mit einer nachhaltigen Steigerung der Verkehrssicherheit. Dies kann beispielsweise durch eine überraschende Lichtsignatur verwirklicht sein, beispielsweise indem nicht offensichtlich ist, in welchen geometrischen Ausführungen die Lichtfunktion leuchtet und/oder in welchen geometrischen Grenzen sie ausgeführt wird. Dies wird erst klar im angeschalteten Zustand der Lichtfunktion.

Durch DE 10 2015 216 746 A1 ist eine Fahrzeugleuchte mit einem von einem Leuchtengehäuse mit einer Lichtöffnung und einer diese zumindest teilweise verschließenden Lichtscheibe wenigstens zum Teil umschlossenen Leuchteninnenraum bekannt. Der Leuchteninnenraum beherbergt einen Reflektor sowie mindestens eine Licht eines ersten Wellenlängenbereichs abstrahlende erste Lichtquelle und mindestens eine Licht eines zweiten Wellenlängenbereichs abstrahlende zweite Lichtquelle. Der Reflektor ist zumindest zum Teil mit einer wellenlängenselektiven Beschichtung versehen, die für das Licht des zweiten Wellenlängenbereichs transparent ausgeführt ist. Die erste Lichtquelle strahlt ihr Licht in den Reflektor ein, welcher eine sehr glatte Oberfläche aufweist und dadurch das Licht der ersten Lichtquelle zur Lichtscheibe hin umlenkt. Die zweite Lichtquelle ist beim Blick durch die Lichtscheibe auf den Reflektor gesehen hinter dem Reflektor angeordnet. Die zweite Lichtquelle strahlt ihr Licht zur Lichtscheibe hin zumindest durch den mit der wellenlängenselektiven Beschichtung versehen Teil des Reflektors hindurch. Der Reflektor kann bereichsweise mit unterschiedlichen wellenlängenselektiven Beschichtungen versehen sein.

Durch EP 3 106 348 A1 ist bekannt, reflektierende und/oder diffuse Partien auf der äußeren Oberfläche eines eine Hauptlichtquelle tragenden Substrats vorzusehen, um Licht einer zusätzlichen Lichtquelle in von einer durch die Hauptlichtquelle erfüllten Lichtverteilung verschiedenen Lichtverteilung Richtung einer Lichtscheibe umzulenken.

Durch US 2016 0178152 A1 ist eine Fahrzeugleuchte mit einem von einem Leuchtengehäuse mit einer Lichtöffnung und einer diese zumindest teilweise verschließenden Lichtscheibe wenigstens zum Teil umschlossenen Leuchteninnenraum bekannt. Der Leuchteninnenraum beherbergt eine Flächenlichtquelle, die als Reflektor ausgebildet ist, sowie mindestens eine Licht eines ersten Wellenlängenbereichs abstrahlende, als weitere Flächenlichtquelle ausgebildete erste Lichtquelle und mindestens eine Licht eines zweiten Wellenlängenbereichs abstrahlende zweite Lichtquelle. Der Reflektor ist zumindest zum Teil mit einer wellenlängenselektiven Beschichtung versehen, die für das Licht des zweiten Wellenlängenbereichs transparent ausgeführt ist. Die erste Lichtquelle strahlt ihr Licht in den Reflektor ein, welcher das Licht der ersten Lichtquelle zur Lichtscheibe hin umlenkt. Die zweite Lichtquelle ist beim Blick durch die Lichtscheibe auf den Reflektor gesehen hinter dem Reflektor angeordnet. Die zweite Lichtquelle strahlt ihr Licht zur Lichtscheibe hin zumindest durch den mit der wellenlängenselektiven Beschichtung versehen Teil des Reflektors hindurch.

Durch CN 107 883 341 A1 ist eine Fahrzeugleuchte mit einem von einem Leuchtengehäuse mit einer Lichtöffnung und einer diese zumindest teilweise verschließenden Lichtscheibe wenigstens zum Teil umschlossenen Leuchteninnenraum bekannt. Der Leuchteninnenraum beherbergt einen Reflektor sowie mindestens eine Licht eines ersten Wellenlängenbereichs abstrahlende erste Lichtquelle und mindestens eine Licht eines zweiten Wellenlängenbereichs abstrahlende zweite Lichtquelle. Der Reflektor ist zumindest zum Teil mit einer wellenlängenselektiven Beschichtung versehen, die für das Licht des zweiten Wellenlängenbereichs transparent ausgeführt ist. Die erste Lichtquelle strahlt ihr Licht in den Reflektor ein, welcher das Licht der ersten Lichtquelle zur Lichtscheibe hin umlenkt. Die zweite Lichtquelle ist beim Blick durch die Lichtscheibe auf den Reflektor gesehen hinter dem Reflektor angeordnet. Die zweite Lichtquelle strahlt ihr Licht zur Lichtscheibe hin durch den mit der wellenlängenselektiven Beschichtung versehen Teil des Reflektors hindurch.

Eine Aufgabe der Erfindung ist es, eine mehrere Lichtfunktionen verwirklichende Fahrzeugleuchte mit verringertem Bauraumbedarf zu entwickeln, die einer Steigerung der Verkehrssicherheit beiträgt.

Die Aufgabe wird durch die Merkmale des unabhängigen Anspruchs gelöst. Vorteilhafte Ausführungsformen sind in den Ansprüchen, den Zeichnungen sowie in der nachfolgenden Beschreibung, einschließlich der zu den Zeichnungen zugehörigen, wiedergegeben.

Die Erfindung betrifft demnach eine Fahrzeugleuchte mit einem von einem Leuchtengehäuse mit einer Lichtöffnung und einer diese zumindest teilweise verschließenden Lichtscheibe wenigstens zum Teil umschlossenen Leuchteninnenraum.

Der Leuchteninnenraum beherbergt einen Reflektor sowie ein erstes Leuchtmittel mit mindestens einer Licht eines ersten Wellenlängenbereichs abstrahlenden ersten Lichtquelle und ein zweites Leuchtmittel mit mindestens einer Licht eines zweiten Wellenlängenbereichs abstrahlenden zweiten Lichtquelle.

Der Reflektor ist mit einer wellenlängenselektiven Beschichtung versehen, die für das Licht des ersten Wellenlängenbereichs reflektierend ausgeführt ist.

Der Reflektor ist in einem zusammenhängenden Flächenabschnitt, oder in mehreren voneinander getrennten Flächenabschnitten, mit der wellenlängenselektiven Beschichtung versehen, die für das Licht des ersten Wellenlängenbereichs reflektierend ausgeführt ist. Der verbleibende, frei von der wellenlängenselektiven Beschichtung ausgeführte Teil des Reflektors ist mit einer Verspiegelung versehen.

Für das Licht des zweiten Wellenlängenbereichs ist die wellenlängenselektive Beschichtung transparent ausgeführt.

Die erste Lichtquelle strahlt ihr Licht in den Reflektor ein. Der Reflektor lenkt das Licht der ersten Lichtquelle zur Lichtscheibe hin um.

Genauer lenkt die wellenlängenselektive Beschichtung, mit welcher der Reflektor zumindest teilweise versehen ist, das Licht der ersten Lichtquelle zur Lichtscheibe hin um.

Dabei lenkt zumindest derjenige Teil des Reflektors, der mit der wellenlängenselektiven Beschichtung versehen ist, das Licht der ersten Lichtquelle zur Lichtscheibe hin um.

Bei dem mit der wellenlängenselektiven Beschichtung versehenen Teil des Reflektors kann es sich wahlweise um einen zusammenhängenden Flächenabschnitt, oder um mehrere voneinander getrennte Flächenabschnitte handeln.

Die zweite Lichtquelle ist beim durch die Lichtscheibe hindurch auf den Reflektor gerichteten Blick gesehen hinter dem Reflektor angeordnet.

Die zweite Lichtquelle strahlt ihr Licht frei von einer Umlenkung anhand des Reflektors, welcher das Licht der ersten Lichtquelle zur Lichtscheibe hin umlenkt, durch den Reflektor hindurch zur Lichtscheibe hin.

Damit sind in dem Leuchteninnenraum mindestens zwei Leuchtmittel mit jeweils wenigstens einer Lichtquelle zur Verwirklichung zumindest zweier Lichtfunktionen der Fahrzeugleuchte zumindest zum Teil beherbergt.

Vorteile der Erfindung gegenüber dem Stand der Technik sind eine Integration mehrerer Lichtfunktionen in derselben Leuchtfläche einer Heckleuchte für ein Kraftfahrzeug, einhergehend mit einer Bauraum- und Gewichtseinsparung.

Zur Lösung der ihr zugrunde liegenden Aufgabe sieht die Erfindung demnach eine wellenlängenselektive Beschichtung einer Reflektorfläche für von einer ersten Lichtquelle abgestrahltes Licht eines ersten Wellenlängenbereichs vor, wobei der verbleibende, frei von der wellenlängenselektiven Beschichtung ausgeführte Teil des Reflektors mit einer Verspiegelung versehen ist, Die erste Lichtquelle strahlt das von ihr abgegebene Licht in die Reflektorfläche ein, welche vermittels der wellenlängenselektiven Beschichtung das Licht in Richtung einer Lichtscheibe umlenkt.

Die für das von einer ersten Lichtquelle abgestrahlte Licht des ersten Wellenlängenbereichs als eine Verspiegelung wirkende wellenlängenselektive Beschichtung ist für von einer zweiten Lichtquelle abgestrahltes Licht eines zweiten Wellenlängenbereichs transparent. Die zweite Lichtquelle ist beim Blick von außerhalb des Leuchteninnenraums durch die Lichtscheibe hindurch auf den Reflektor gesehen hinter dem Reflektor angeordnet. Die zweite Lichtquelle strahlt das von ihr abgegebene Licht durch den Reflektor hindurch ohne Umlenkung in Richtung der Lichtscheibe.

Die wellenlängenselektive Beschichtung kann eine oder mehrere Schichten umfassen.

Nur ein eine zusammenhängende Teilfläche und/oder mehrere Teilflächen umfassender Teil des Reflektors ist mit der wellenlängenselektiven Beschichtung versehen, der verbleibende, frei von der wellenlängenselektiven Beschichtung ausgeführte Teil des Reflektors ist mit einer Verspiegelung versehen. In diesem Fall wirkt der gesamte Reflektor für das von der ersten Lichtquelle in ihn eingestrahlte Licht des ersten Wellenlängenbereichs als ein Spiegel, der dieses Licht zur Lichtscheibe hin durch die Lichtöffnung nach außerhalb der Fahrzeugleuchte umlenkt.

Das von der zweiten Lichtquelle abgestrahlte Licht des zweiten Wellenlängenbereichs kann nur an denjenigen Stellen durch den Reflektor hindurchtreten, die mit der wellenlängenselektiven Beschichtung versehen sind.

Hierdurch weist die vermittels der zweiten Lichtquelle verwirklichte Lichtfunktion innerhalb der der Verwirklichung der vermittels der ersten Lichtfunktion verwirklichten Lichtfunktion dienenden Leuchtfläche eine von der ersten Lichtfunktion verschiedene Lichtsignatur in Form und Größe auf.

Es ist ersichtlich, dass die Erfindung eine Integration mehrerer Lichtfunktionen in der selben Leuchtfläche einer Heckleuchte für ein Kraftfahrzeug vorsieht, einhergehend mit einer Bauraum- und Gewichtseinsparung.

Durch die Verwirklichung zweier Lichtfunktionen innerhalb der beim Blick von außerhalb des Leuchteninnenraums durch die Lichtscheibe einsehbaren Reflektorfläche wird der Bauraumbedarf verringert, weil die beiden durch das erste und das zweite Leuchtmittel verwirklichten Lichtfunktionen zumindest zum Teil die selbe Leuchtfläche einnehmen.

Die unterschiedliche Verwirklichung - einmal Reflektion am Reflektor und einmal Transmission durch den Reflektor hindurch - tragen nochmals zu einer weiteren Verringerung des Bauraumbedarfs bei, weil hierdurch eine räumliche Nähe der beiden Leuchtmittel vermieden werden kann. Die Lichtquellen der beiden Leuchtmittel können quasi genestet angeordnet werden, wodurch der Bauraumbedarf wesentlich geringer ist, als bei einer Anordnung der Lichtquellen der beiden Leuchtmittel beispielsweise nebeneinander.

Der geringere Bauraumbedarf hat außerdem geringere Leuchtenabmessungen zur Folge. Dies resultiert in einem geringeren Gesamtgewicht der Fahrzeugleuchte im Vergleich zu einer mit denselben Lichtfunktionen ausgestatteten konventionellen Leuchte nach dem Stand der Technik. Neben den offensichtlichen Vorteilen hat dies auch einen geringeren Antriebsenergiebedarf eines mit einer solchen Fahrzeugleuchte ausgestatteten Fahrzeugs zur Folge, da weniger Gewicht beschleunigt werden muss.

Indem beispielsweise eine innerhalb der durch die durch die Lichtscheibe der Fahrzeugleuchte hindurch einsehbare Reflektorfläche gebildeten Leuchtfläche vermittels des ersten oder des zweiten Leuchtmittels verwirklichte Lichtfunktion einen Teil der Gesamtleuchtfläche einnimmt, und eine vermittels des verbleibenden Leuchtmittels verwirklichte Lichtfunktion die Gesamtleuchtfläche einnimmt, aber auch wenn beide Lichtfunktionen die Gesamtleuchtfläche einnehmen, so wird zumindest eine der beiden Lichtfunktionen quasi unsichtbar oder versteckt ausgeführt, sodass ein Überraschungseffekt bei deren Aktivierung entsteht. Hierdurch wird die Wahrnehmungskraft der jeweiligen betroffenen Lichtfunktion erhöht, einhergehend mit einer Steigerung der Verkehrssicherheit.

Dies wird nochmals gesteigert, indem eine der beiden Lichtfunktionen nur einen Teil der Gesamtleuchtfläche einnimmt, wodurch für die verbleibende Lichtfunktion eine überraschende Lichtsignatur im Vergleich zu der die Gesamtleuchtfläche einehmenden Lichtfunktion erhalten wird. Durch eine entsprechende Ausgestaltung des mit der wellenlängenselektiven Beschichtung versehenen Teils des Reflektors ist für den durch die Lichtscheibe hindurch in den Leuchteninnenraum und damit auf die von der Ansichtsfläche des Reflektors gebildete Gesamtleuchtfläche blickenden Betrachter nicht offensichtlich, in welchen geometrischen Ausführungen die verbleibende Lichtfunktion leuchtet und/oder in welchen geometrischen Grenzen sie ausgeführt wird. Dies wird erst klar im angeschalteten Zustand der verbleibenden Lichtfunktion.

Zusätzliche, über die vollständige Lösung der gestellten Aufgabe und/oder über die voran zu den einzelnen Merkmalen genannten Vorteile hinausgehende Vorteile gegenüber dem Stand der Technik sind nachfolgend aufgeführt.

Indem mehrere Funktionen innerhalb der selben Leuchtfläche ausgeführt werden kann auch die Aerodynamik der mit entsprechenden Fahrzeugleuchten ausgestatteten Fahrzeugen verbessert werden, weil eine kleinere Ansichtsfläche in den entsprechenden Abstrahlrichtungen bereit gehalten werden muss, als wenn für jede Lichtfunktion eine eigene Leuchtfläche vorgehalten werden muss.

Darüber hinaus wird die sich aus dem zur Herstellung erforderlichen Ressourceneinsatz zur Anzahl der erfüllbaren Lichtfunktionen ergebende Gesamteffizienz von Leuchten erhöht, indem mehrere Funktionen innerhalb der selben Leuchtfläche ausgeführt werden.

Im ausgeschalteten Zustand erlaubt die Erfindung darüber hinaus überraschende farbliche Effekte zu verwirklichen. Dies kann beispielsweise erreicht werden, indem die wellenlängenselektive Beschichtung bei der Bestrahlung mit natürlichem Tageslicht einen Farbeffekt aufweist, beispielsweise indem sie in einer von einer Lichtfarbe der ersten und/oder der zweiten Lichtfunktion abweichenden Farbe zu schimmern scheint. Beispielsweise kann die wellenlängenselektive Beschichtung bei Bestrahlung beziehungsweise Beleuchtung mit natürlichem Tageslicht bläulich schimmernd ausgeführt sein. Wird nun innerhalb einer solchen beispielsweise bläulich schimmernden Fläche eine beispielsweise rote Brems- oder Schlusslichtfunktion, oder eine gelbe Wiederholblinklichtfunktion zur Fahrtrichtungsanzeige und/oder zur Warnung anderer Verkehrsteilnehmer ausgeführt, so stellt dies einen überraschenden Effekt mit den voranstehend geschilderten Vorteilen eines Beitrags zur Steigerung der Verkehrssicherheit dar.

Demnach schafft die Erfindung als überraschenden Nebeneffekt eine Vergrößerung des Gestaltungs- und Formgebungsspielraums für die Entwicklung von Leuchten allgemein und für Fahrzeugleuchte im Speziellen.

Die Erfindung schafft somit eine mehrere Lichtfunktionen verwirklichende Fahrzeugleuchte mit verringertem Bauraumbedarf und verringertem Gesamtgewicht sowie mit einem Beitrag zu einer gesteigerten Verkehrssicherheit durch eine überraschende Lichtsignatur zumindest einer der beiden die Reflektorfläche einnehmenden Lichtfunktionen.

Darüber hinaus wirken sich der verringerte Bauraumbedarf und das verringerte Gesamtgewicht kostensenkend auf die Herstellungs- und auch auf die Umgangskosten aus, zu denen beispielsweise auch der Transport, die Lagerhaltung und die Vorhaltekosten von der Herstellung der Fahrzeugleuchten über deren Lieferung an Automobilhersteller bis hin zum Zusammenbau von mit entsprechenden Fahrzeugleuchten ausgestatteten Automobilen und deren Auslieferung an die Endkunden zählen.

Wichtig ist hervorzuheben, dass die Erfindung verwirklicht sein kann durch eine Multifunktionsintegration mit Hilfe einer wellenlängenselektiven Schicht.

Die Erfindung stellt eine neuartige Lösung dar, um mehrere Signallichtfunktionen mit demselben, die durch eine Ansichtsfläche eines beim Blick von außerhalb einer Fahrzeugleuchte durch deren Lichtscheibe hindurch einsehbaren Reflektors gebildete Leuchtfläche umfassenden Leuchtenbereich zu verwirklichen. In einer Umsetzung werden wellenlängenselektive Schichten eingesetzt. Durch deren Einsatz können die voranstehend bereits beschriebenen und die wie nachfolgend zu den Zeichnungen noch ausgeführt erwähnten Kriterien in einer Leuchte verwirklicht werden.

Die Erfindung wird nachfolgend anhand von in der Zeichnung dargestellter Ausführungsbeispiele näher erläutert. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar. Es zeigen in schematischer Darstellung:
- Fig. 1: eine Übersicht verschiedener optischer Schichten. Darin sind die spektralen Charakteristiken wie folgt bezeichnet: Reflexion (R), Transmission (T), Absorption (A), wobei λ die Wellenlänge und s und p die Polarisationskomponenten des Lichts bezeichnen.
- Fig. 2: ein erstes Ausführungsbeispiel einer Fahrzeugleuchte in einem Längsschnitt.
- Fig. 3: ein zweites Ausführungsbeispiel einer Fahrzeugleuchte in einem Längsschnitt.
- Fig. 4: spektrale Charakteristiken eines Ausführungsbeispiels einer wellenlängenselektiven Schicht, wobei Fig. 4a) die Transmission (T) über der in Nanometern angegebenen Wellenlänge (λ) und Fig. 4b) die Reflexion (R) über der in Nanometern angegebenen Wellenlänge (λ) der wellenlängenselektiven Schicht zeigt.
- Fig. 5: ein drittes Ausführungsbeispiel einer Fahrzeugleuchte in einem Längsschnitt.
- Fig. 6: ein viertes Ausführungsbeispiel einer Fahrzeugleuchte in einem Längsschnitt.

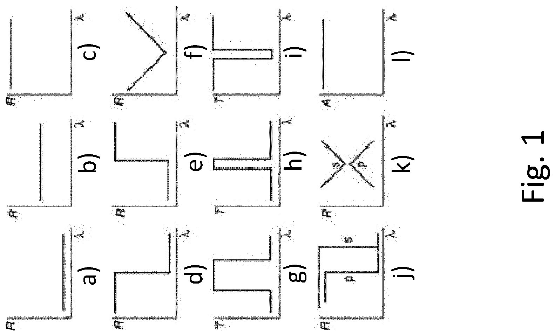

Im Bereich der Optik sind eine Vielzahl von optischen Schichten und Beschichtungen mit unterschiedlichen Funktionen bekannt, wie Fig. 1 - ohne Anspruch auf Vollständigkeit - zeigt.

Eine in Fig. 1 dargestellte Übersicht verschiedener optischer Schichten, in welcher Übersicht R die Reflexion, T die Transmission, A die Absorption, A die Wellenlänge und s und p die Polarisationskomponenten des Lichts bezeichnen, zeigt in:
- Fig. 1a) eine Entspiegelung, bei der eine oder mehrere Antireflexbeschichtungen eingesetzt werden, um in einem gewünschten Wellenlängenbereich die Reflexion einer optischen Oberfläche zu unterdrücken. Hiermit einhergehen kann eine Erhöhung der Transmission. Beispielsweise kann die Reflexion einer optischen Oberfläche durch eine destruktive Interferenz der an der optischen Oberfläche und einer oder mehreren verschiedenen Schichten, mit denen die optische Oberfläche zum Zwecke ihrer Entspiegelung versehen ist, reflektierten Strahlen erreicht werden.
- Fig. 1b) einen Neutralleiter, bei dem eine oder mehrere Beschichtungen einer optischen Oberfläche verwendet werden, um in einem gewünschten Wellenlängenbereich im gleichen Maße Reflexion wie Transmission zu erhalten.
- Fig. 1c) einen Spiegel, bei dem eine oder mehrere Reflexbeschichtungen eingesetzt werden, um in einem gewünschten Wellenlängenbereich eine hohe Reflexion einer optischen Oberfläche zu erhalten.
- Fig. 1d) ein Kurzpassfilter, bei dem eine oder mehrere Beschichtungen einer optischen Oberfläche dazu eingesetzt werden, um in einem gewünschten Wellenlängenbereich die Reflexion kurzwelligen Lichts zu erhöhen und um die Reflexion langwelligen Lichts zu vermindern.
- Fig. 1e) ein Langpassfilter, bei dem eine optische Oberfläche mit einer oder mehreren Beschichtungen versehen ist, um in einem gewünschten Wellenlängenbereich die Reflexion kurzwelligen Lichts zu vermindern und um die Reflexion langwelligen Lichts zu erhöhen.
- Fig. 1f) ein Formfilter, bei dem eine oder mehrere Beschichtungen einer optischen Oberfläche dazu eingesetzt werden, um in einem gewünschten Wellenlängenbereich die Reflexion kurzwelligen Lichts mit zunehmender Wellenlänge zu vermindern und die Reflexion langwelligen Lichts mit zunehmender Wellenlänge zu erhöhen. An einem Schnittpunkt der beiden mittels der Beschichtungen erzeugten gegenläufigen Eigenschaften weist das Formfilter ein Transmissionsmaximum und ein Reflexionsminimum auf. Grundsätzlich denkbar ist auch eine Umkehrung, wobei in einem gewünschten Wellenlängenbereich die Reflexion kurzwelligen Lichts mit zunehmender Wellenlänge erhöht und die Reflexion langwelligen Lichts mit zunehmender Wellenlänge vermindert wird. Am Schnittpunkt dieser beiden mittels der Beschichtungen erzeugten gegenläufigen Eigenschaften weist das so erhaltene Formfilter ein Reflexionsmaximum und ein Transmissionsminimum auf.
- Fig. 1g) ein Breitbandfilter, welches eine oder mehrere Beschichtungen einer optischen Oberfläche umfasst, welche die Reflexion eines weiten, gewünschten Wellenlängenbereichs vermindern und die Reflexion außerhalb dieses Wellenlängenbereichs erhöhen.
- Fig. 1h) ein Schmalbandfilter, welches eine oder mehrere Beschichtungen einer optischen Oberfläche umfasst, welche die Reflexion eines schmalen, gewünschten Wellenlängenbereichs vermindern und die Reflexion außerhalb dieses Wellenlängenbereichs erhöhen.
- Fig. 1i) ein Minusfilter, welches eine oder mehrere Beschichtungen einer optischen Oberfläche umfasst, welche die Reflexion eines schmalen, gewünschten Wellenlängenbereichs erhöhen und die Reflexion außerhalb dieses Wellenlängenbereichs vermindern.
- Fig. 1j) einen Polarisator, welcher eine oder mehrere Beschichtungen einer optischen Oberfläche umfasst, welche zumindest in einem gewünschten Wellenlängenbereich Licht, mit einer bestimmten Polarisation aus nicht, teilweise oder anders polarisiertem Licht herauszufiltern.
- Fig. 1k) einen nicht polarisierenden Teiler, welcher eine oder mehrere Beschichtungen einer optischen Oberfläche umfasst, welche zumindest in einem gewünschten Wellenlängenbereich einen einzelnen Lichtstrahl in zwei Teilstrahlen trennen. Bei einem polarisierenden Teiler hingegen wird das Teilungsverhältnis durch den Polarisationswinkel des Lichts bestimmt.
- Fig. 1l) ein INDAB-Schichtsystem (INDAB: Induced Resonance Absorption), welches eine oder mehrere Beschichtungen einer optischen Oberfläche nutzt, um eine hohe Absorption eines gewünschten Wellenlängenbereichs bei entsprechend verminderter Reflexion und/oder Transmission zu erhalten.

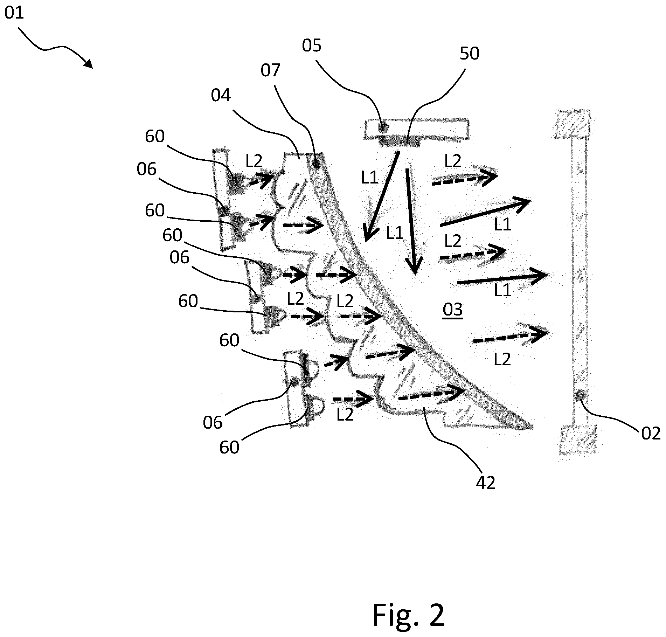

Eine in Fig. 2, Fig. 3, Fig. 5, Fig. 6 ganz oder in Teilen dargestellte Fahrzeugleuchte 01 ist mit einem von einem Leuchtengehäuse mit einer Lichtöffnung und einer diese zumindest teilweise verschließenden Lichtscheibe 02 wenigstens zum Teil umschlossenen Leuchteninnenraum 03 ausgestattet.

Der Leuchteninnenraum 03 beherbergt einen Reflektor 04 sowie ein erstes Leuchtmittel 05 mit mindestens einer Licht eines ersten Wellenlängenbereichs abstrahlenden ersten Lichtquelle 50 und ein zweites Leuchtmittel 06 mit mindestens einer Licht eines zweiten Wellenlängenbereichs abstrahlenden zweiten Lichtquelle 60.

Die Leuchtmittel 05, 06 können beispielsweise LEDs als Lichtquellen 50, 60 umfassen, die beispielsweise auf einem oder mehreren Leuchtmittelträgern des jeweiligen Leuchtmittels 05, 06 angeordnet und in dem Leuchteninnenraum beherbergt sind.

Zum Betrieb sowohl von LEDs, als auch von OLEDs als Lichtquellen für ein Leuchtmittel einer Fahrzeugleuchte können eine oder mehrere mehr oder minder komplexe elektronische Steuerschaltungen vorgesehen sein, die beispielsweise auf einem oder mehreren Leuchtmittelträgern des Leuchtmittels angeordnet und in dem Leuchteninnenraum beherbergt sein können.

Demnach kann ein Leuchtmittel mit einer oder mehreren LEDs als Lichtquellen neben der mindestens einen LED zumindest noch über ein weiteres Elektronikbauteil verfügen.

Die mindestens eine Lichtquelle 50, 60 eines Leuchtmittels 05, 06 und gegebenenfalls wenigstens ein weiteres Elektronikbauteil können auf einem gemeinsamen, einen Leiterbahnträger darstellenden Leuchtmittelträger, oder auf räumlich getrennten, untereinander beispielsweise durch einen Kabelbaum oder einen oder mehrere Teile eines Kabelbaums elektrisch verbundenen Leiterbahnträgern, von denen wenigstens einer einen Leuchtmittelträger bildet, angeordnet sein.

Bei den in Verbindung mit einem Leuchtmittelträger zum Einsatz kommenden Leiterbahnträgern handelt es sich bevorzugt um Leiterbahnträger, wie sie auch zur elektrischen Verschaltung von Elektronikbauteilen beispielsweise zur Ansteuerung von anderen Leuchtmitteln, als etwa LEDs und OLEDs, verwendet werden.

Weit verbreitetste Leiterbahnträger sind kurz als Leiterkarte, Platine oder gedruckte Schaltung (printed circuit board, PCB) bezeichnete, starre Leiterplatten.

Eine Leiterplatte ist ein Träger für elektronische Bauteile. Sie dient der mechanischen Befestigung und elektrischen Verbindung. Nahezu jedes elektronische Gerät enthält eine oder mehrere Leiterplatten.

Eine weitere Möglichkeit zur mechanischen Befestigung und elektrischen Verbindung elektronischer Bauteile stellen in MID-Technik (MID-Technik: Molded-Interconnect-Device-Technik) hergestellte spritzgegossene Schaltungsträger dar. Hierbei werden mit den elektrischen Anschlüssen eines elektronischen Bauteils beispielsweise durch Oberflächenmontagetechnik, Durchsteckmontagetechnik oder durch Draht- oder ACF-Bonding zu kontaktierende Leiterbahnen in ein Spritzgussteil, welches gleichzeitig als Träger des einen oder der mehreren elektronischen Bauteile dient, im Spritzgussprozess integriert.

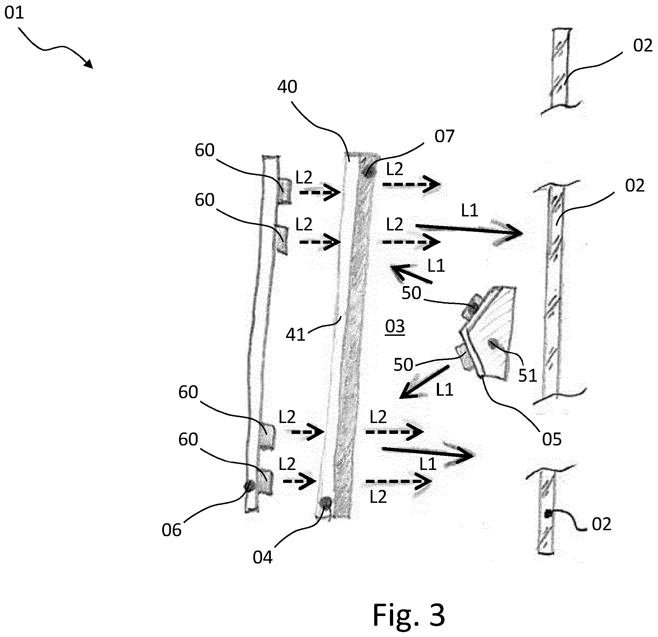

Beispielsweise kann ein solches in MID-Technik mit Leiterbahnen versehenes Spritzgussteil als ein Blendenelement 51 ausgeführt sein (Fig. 3).

Der Reflektor 04 der Fahrzeugleuchte ist zumindest zum Teil mit einer wellenlängenselektiven Beschichtung 07 versehen. Die wellenlängenselektive Beschichtung 07 ist für das Licht des ersten Wellenlängenbereichs reflektierend ausgeführt. Für das Licht des zweiten Wellenlängenbereichs ist die wellenlängenselektive Beschichtung 07 transparent ausgeführt.

Der Reflektor 04 ist dabei zumindest zum Teil,oder in nur einem Teil seiner Gesamtfläche, in einem zusammenhängenden Flächenabschnitt, oder in mehreren voneinander getrennten Flächenabschnitten, mit der wellenlängenselektiven Beschichtung 07 versehen sein, die für Licht des ersten Wellenlängenbereichs reflektierend und für Licht des zweiten Wellenlängenbereichs transparent ausgeführt ist.

Zumindest ist die wellenlängenselektive Beschichtung 07 für wenigstens eine von dem ersten Wellenlängenbereich umfasste, bevorzugt für das menschliche Auge erkennbare erste Lichtfarbe reflektierend, wohingegen die wellenlängenselektive Beschichtung 07 für wenigstens eine von dem zweiten Wellenlängenbereich umfasste, bevorzugt für das menschliche Auge erkennbare zweite Lichtfarbe transparent ist.

Demnach umfasst der erste Wellenlängenbereich zumindest eine vorzugsweise für das menschliche Auge sichtbare erste Lichtfarbe und der zweite Wellenlängenbereich umfasst wenigstens eine ebenfalls vorzugsweise für das menschliche Auge sichtbare, von der ersten Lichtfarbe verschiedene, zweite Lichtfarbe.

Der erste Wellenlängenbereich und der zweite Wellenlängenbereich überschneiden einander vorzugsweise nicht. Zumindest überschneiden sich der erste Wellenlängenbereich und der zweite Wellenlängenbereich bevorzugt weder im Wellenlängenbereich der ersten Lichtfarbe, noch im Wellenlängenbereich der zweiten Lichtfarbe.

Die mindestens eine erste Lichtquelle 50 der Fahrzeugleuchte 01 strahlt ihr Licht in den Reflektor 04 ein. Der Reflektor 04 lenkt das Licht der mindestens einen ersten Lichtquelle 50 zur Lichtscheibe 02 hin um.

Genauer lenkt die wellenlängenselektive Beschichtung 07, mit welcher der Reflektor 04 zumindest teilweise versehen ist, Licht der ersten Lichtquelle 50 zur Lichtscheibe 02 hin um.

Dabei lenkt zumindest derjenige Teil des Reflektors, der mit der wellenlängenselektiven Beschichtung versehen ist, das Licht der ersten Lichtquelle zur Lichtscheibe hin um.

Mit anderen Worten trägt zumindest die wellenlängenselektive Beschichtung 07 aufgrund ihrer für Licht des ersten Wellenlängenbereichs reflektierende Eigenschaft in erheblichem Maße zu einer Umlenkung oder einer Beeinflussung oder einer Beeinträchtigung des Strahlengangs des von der oder den ersten Lichtquellen 50 abgestrahlten Lichts von dessen Ursprung bis zu dessen Durchtritt durch die Lichtscheibe 02 bei.

Bei dem mit der wellenlängenselektiven Beschichtung versehenen Teil des Reflektors kann es sich wahlweise um einen zusammenhängenden Flächenabschnitt, oder um mehrere voneinander getrennte Flächenabschnitte handeln.

Bei dem von der wellenlängenselektiven Beschichtung 07 zur Lichtscheibe 02 hin umgelenkten Licht der ersten Lichtquelle 50 kann es sich um das gesamte, von der ersten Lichtquelle 50 emittierte Licht, oder nur um einen besonders bevorzugt wellenlängenspezifischen Teil des von der ersten Lichtquelle 50 emittierten Lichts handeln.

Ausgewählte, von ersten Lichtquellen 50 ausgehende Lichtstrahlen L1 einer vom von den ersten Lichtquelle 50 abgestrahlten Wellenlängenbereich umfassten Lichtfarbe sind in Fig. 2 und Fig. 3 anhand mit durchgezogenen Linien eingezeichneter Pfeile dargestellt.

Die mindestens eine zweite Lichtquelle 60 der Fahrzeugleuchte 01 ist beim Blick von außerhalb des Leuchteninnenraums 03 durch die Lichtscheibe 02 hindurch auf den Reflektor 04 gesehen hinter dem Reflektor 04 angeordnet.

Die mindestens eine zweite Lichtquelle 60 strahlt ihr Licht frei von einer Umlenkung anhand des Reflektors 04, welcher das Licht der einen oder mehreren ersten Lichtquellen 50 zur Lichtscheibe 02 hin umlenkt, durch den Reflektor 04 hindurch zur Lichtscheibe 02 hin.

Genauer strahlt die zweite Lichtquelle 60 ihr Licht frei von einer Umlenkung anhand des Reflektors 04, welcher das Licht der ersten Lichtquelle 50 zur Lichtscheibe 02 hin umlenkt, zumindest durch den mit der wellenlängenselektiven Beschichtung 07 versehen Teil des Reflektors 04 hindurch zur Lichtscheibe 02 hin.

Mit anderen Worten trägt zumindest die wellenlängenselektive Beschichtung 07 aufgrund ihrer für Licht des zweiten Wellenlängenbereichs transparenten Eigenschaft nicht zu einer Umlenkung oder einer Beeinflussung oder einer Beeinträchtigung des Strahlengangs des von der oder den zweiten Lichtquellen 60 abgestrahlten Lichts von dessen Ursprung bis zu dessen Durchtritt durch die Lichtscheibe 02 bei.

Demnach strahlt die mindestens eine zweite Lichtquelle 60 ihr Licht frei von einer Umlenkung anhand der wellenlängenselektiven Beschichtung 07, mit welcher der Reflektor 04 versehen ist, welcher das Licht der einen oder mehreren ersten Lichtquellen 50 zur Lichtscheibe 02 hin umlenkt, durch den Reflektor 04 hindurch zur Lichtscheibe 02 hin.

Ist eine Umlenkung oder eine Beeinflussung des Strahlengangs des von der oder den zweiten Lichtquellen 60 abgestrahlten Lichts von dessen Ursprung bis zu dessen Durchtritt durch die Lichtscheibe 02 beispielsweise zum Erhalt einer vorgegebenen Lichtverteilung für eine mittels des von der oder den zweiten Lichtquellen 60 abgestrahlten Lichts zu verwirklichenden Lichtfunktion der Fahrzeugleuchte 01 notwendig oder erwünscht, kann dies durch Verwendung eines einseitig mit der wellenlängenselektiven Beschichtung 07 versehenen Optikkörpers 42 geschehen, wie in Fig. 2 dargestellt.

Der Optikkörper 42 kann hierbei als ein Teil des Reflektors 04 ausgeführt sein, den Reflektor 04 umfassen, oder vom Reflektor 04 umfasst sein. Der Optikkörper 42 kann mit der wellenlängenselektiven Beschichtung 07 versehen sein. Vorzugsweise ist der Optikkörper 42 auf seiner der ersten Lichtquelle 50 zugewandten Seite mit der wellenlängenselektiven Beschichtung 07 versehen. Hierdurch kann der Optikkörper 42 als Substrat für die wellenlängenselektiven Beschichtung 07 dienen.

Alternativ kann der Optikkörper 42 mit dem mit der wellenlängenselektiven Beschichtung 07 versehenen Reflektor 04 verbunden, beispielsweise verklebt sein.

In Fig. 2 und Fig. 3 sind ausgewählte, anhand mit gestrichelten Linien eingezeichneter Pfeile dargestellte, von zweiten Lichtquellen 60 ausgehende Lichtstrahlen L2 einer vom von den zweiten Lichtquellen 60 abgestrahlten Wellenlängenbereich umfassten Lichtfarbe eingetragen.

Eine in Fig. 2, Fig. 3, Fig. 5 und Fig. 6 dargestellte Fahrzeugleuchte 01 umfasst demnach einen von einem Leuchtengehäuse mit einer Lichtöffnung und einer diese zumindest teilweise verschließenden Lichtscheibe 02 wenigstens zum Teil umschlossenen Leuchteninnenraum 03, welcher einen Reflektor 04 sowie mindestens eine Licht eines ersten Wellenlängenbereichs abstrahlende erste Lichtquelle 50 und mindestens eine Licht eines zweiten Wellenlängenbereichs abstrahlende zweite Lichtquelle 60 beherbergt, wobei:
- der Reflektor 04 zumindest zum Teil mit einer wellenlängenselektiven Beschichtung 07 versehen ist, die für das Licht des ersten Wellenlängenbereichs reflektierend und für das Licht des zweiten Wellenlängenbereichs transparent ausgeführt ist,
- die erste Lichtquelle 50 ihr Licht in den Reflektor 04 einstrahlt, wobei die wellenlängenselektive Beschichtung 07, mit welcher der Reflektor 04 zumindest zum Teil versehen ist, das Licht der ersten Lichtquelle 50 zur Lichtscheibe 02 hin umlenkt,
- die zweite Lichtquelle 60 beim Blick durch die Lichtscheibe 02 auf den Reflektor 04 gesehen hinter dem Reflektor 04 angeordnet ist, und
- die zweite Lichtquelle 60 ihr Licht zur Lichtscheibe 02 hin frei von einer Umlenkung anhand der wellenlängenselektiven Beschichtung 07 zumindest durch den mit der wellenlängenselektiven Beschichtung 07 versehen Teil des Reflektors 04 hindurchstrahlt.

Damit sind in dem Leuchteninnenraum 03 mindestens zwei Leuchtmittel 05, 06 mit jeweils wenigstens einer Lichtquelle 50, 60 zur Verwirklichung zumindest zweier Lichtfunktionen der Fahrzeugleuchte 01 zumindest zum Teil beherbergt.

Vorteile der Erfindung gegenüber dem Stand der Technik sind eine Integration mehrerer Lichtfunktionen in der selben, durch eine kurz als Reflektorfläche bezeichnete Ansichtsfläche des mit der wellenlängenselektiven Beschichtung 07 versehenen Reflektors 04 beim Blick von außerhalb des Leuchteninnenraums 03 durch die Lichtscheibe 02 hindurch gebildeten Leuchtfläche einer Heckleuchte für ein Kraftfahrzeug, einhergehend mit einer Bauraum- und Gewichtseinsparung.

Die Vorteile werden erreicht durch eine wellenlängenselektive Beschichtung 07 einer Reflektorfläche für von einer ersten Lichtquelle 05 abgestrahltes Licht eines ersten Wellenlängenbereichs. Die erste Lichtquelle 05 strahlt das von ihr abgegebene Licht in die Reflektorfläche ein, welche vermittels der wellenlängenselektiven Beschichtung 07 das Licht in Richtung einer Lichtscheibe 02 umlenkt.

Die für das von einer ersten Lichtquelle 50 abgestrahlte Licht des ersten Wellenlängenbereichs als eine Verspiegelung wirkende wellenlängenselektive Beschichtung 07 ist für von einer zweiten Lichtquelle 60 abgestrahltes Licht eines zweiten Wellenlängenbereichs transparent. Die zweite Lichtquelle 60 ist beim Blick von außerhalb des Leuchteninnenraums 03 durch die Lichtscheibe 02 hindurch auf den Reflektor 04 gesehen hinter dem Reflektor 04 angeordnet. Die zweite Lichtquelle 60 strahlt das von ihr abgegebene Licht durch den Reflektor 60 hindurch ohne Umlenkung durch die wellenlängenselektive Beschichtung 07 in Richtung der Lichtscheibe 02.

Die wellenlängenselektive Beschichtung 07 kann eine oder mehrere Schichten umfassen.

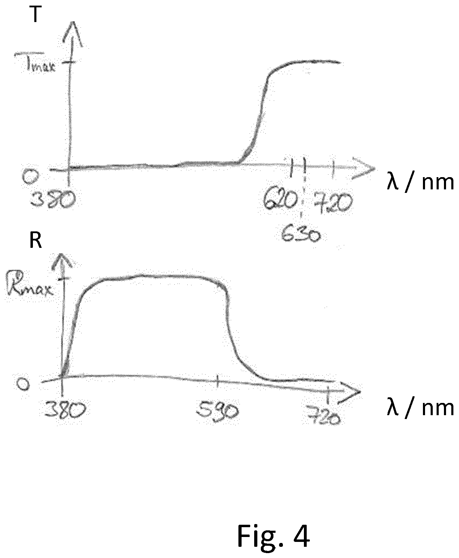

Beispielhafte charakteristische wellenlängenspezifische optische Eigenschaften eines Ausführungsbeispiels einer wellenlängenselektiven Beschichtung 07 sind in Fig. 4 dargestellt.

Für das in Fig. 4 gezeigte Ausführungsbeispiel einer wellenlängenselektiven Beschichtung 07 werden bevorzugt optische Schichten eingesetzt, die in einem gewünschten, eingeschränkten ersten Wellenlängenbereich hauptsächlich transmittierende und in einem angrenzenden gewünschten, eingeschränkten zweiten Wellenlängenbereich hauptsächlich reflektierende Eigenschaften aufweisen, entsprechend beispielsweise einer Filterfunktion.

Besonders vorteilhaft kann die Erfindung in Verbindung mit einer Erfüllung einer ersten Lichtfunktion erster Lichtfarbe in Gelb und in Verbindung mit einer Erfüllung einer zweiten Lichtfunktion zweiter Lichtfarbe in Rot verwirklicht werden.

So kann beispielsweise die erste Lichtfarbe in Gelb einen Wellenlängenbereich von oder um 590 nm und die zweite Lichtfarbe in Rot einen Wellenlängenbereich von oder um 630 nm umfassen beziehungsweise von einem jeweiligen Wellenlängenbereich umfasst sein.

Mit Hilfe einer als eine Einzelschicht oder als ein Schichtstapel mit mehreren Schichten ausgeführten wellenlängenselektiven Beschichtung 07, lassen sich Ausführungen wie in Fig. 2, Fig. 3 und wie in charakteristischen wellenlängenspezifischen optischen Eigenschaften ihrer wellenlängenselektiven Beschichtung in Fig. 4 dargestellt verwirklichen.

In Fig. 2 und Fig. 3 sind beispielhaft zwei Kombinationen von Schlusslichtfunktion und Wiederholblinklichtfunktion zur Fahrtrichtungsanzeige und/oder zur Warnung anderer Verkehrsteilnehmer dargestellt. Hierbei werden jeweils die in Fig. 2 und Fig. 3 anhand durchgezogen eingezeichneter Pfeile dargestellten Lichtstrahlen L1 einer vom von den ersten Lichtquelle 50 abgestrahlten Wellenlängenbereich umfassten ersten Lichtfarbe an der wellenlängenselektiven Beschichtung 07 reflektiert und in eine einer vorgegebenen, gewünschten Lichtverteilung einer mittels der ersten Lichtfarbe verwirklichten ersten Lichtfunktion entsprechende Richtung gelenkt, beispielsweise in ein für die erste Lichtfunktion gesetzlich gefordertes Zielgebiet gerichtet, und die anhand gestrichelt eingezeichneter Pfeile dargestellten Lichtstrahlen L2 einer vom von den zweiten Lichtquellen 60 abgestrahlten Wellenlängenbereich umfassten zweiten Lichtfarbe durch die wellenlängenselektiven Beschichtung 07 transmittiert sowie so in eine einer vorgegebenen, gewünschten Lichtverteilung einer mittels der zweiten Lichtfarbe verwirklichten zweiten Lichtfunktion entsprechende Richtung gelenkt, beispielsweise in ein für die zweite Lichtfunktion gesetzlich gefordertes Zielgebiet gerichtet.

Eine vorteilhafte Ausgestaltung der Erfindung sieht vor, dass ein eine zusammenhängende, einen Flächenabschnitt der Gesamtfläche einnehmende Teilfläche umfassender Teil des Reflektors 04 mit der wellenlängenselektiven Beschichtung 07 versehen ist.

Alternativ oder zusätzlich kann ein mehrere unabhängige, jeweils voneinander getrennte, jeweils einen Flächenabschnitt der Gesamtfläche einnehmende Teilflächen umfassender Teil des Reflektors 04 mit der wellenlängenselektiven Beschichtung 07 versehen sein.

Der verbleibende, frei von der wellenlängenselektiven Beschichtung 07 ausgeführte Teil des Reflektors 04 ist erfindungsgemäß mit einer Verspiegelung versehen.

Erfindungsgemäß ist ein eine zusammenhängende Teilfläche und/oder mehrere Teilflächen umfassender Teil des Reflektors 04 mit der wellenlängenselektiven Beschichtung 07 versehen, und der verbleibende, frei von der wellenlängenselektiven Beschichtung 07 ausgeführte Teil des Reflektors 04 ist mit einer Verspiegelung versehen.

In diesem Fall wirkt der gesamte Reflektor 04 für das von der ersten Lichtquelle 50 in ihn eingestrahlte Licht des ersten Wellenlängenbereichs als ein Spiegel, der dieses Licht zur Lichtscheibe 02 hin durch die Lichtöffnung nach außerhalb der Fahrzeugleuchte 01 umlenkt.

Das von der zweiten Lichtquelle 60 abgestrahlte Licht des zweiten Wellenlängenbereichs kann nur an denjenigen Stellen durch den Reflektor 04 hindurchtreten, die mit der wellenlängenselektiven Beschichtung 07 versehen sind.

Hierdurch weist die vermittels der zweiten Lichtquelle 60 verwirklichte Lichtfunktion innerhalb der der Verwirklichung der vermittels der ersten Lichtfunktion verwirklichten Lichtfunktion dienenden Leuchtfläche eine von der ersten Lichtfunktion verschiedene Lichtsignatur in Form und Größe auf.

Die wellenlängenselektive Beschichtung 07 kann zumindest bei einer Bestrahlung mit natürlichem Tageslicht einen Farbeffekt aufweisen.

Beispielsweise kann eine Scheibe mittels einer Einzelschicht, die für rot transmittierend ist, wellenlängenselektiv beschichtet sein. Für den verbleibenden Teil des für das menschliche Auge sichtbaren elektromagnetischen Spektrums weist die Einzelschicht reflektierende Eigenschaften auf. Die mit der Einzelschicht als wellenlängenselektive Beschichtung 07 versehene Scheibe schimmert in diesem Fall bläulich, wenn natürliches Tageslicht auf sie trifft. Eine aus Sicht eines Betrachters der wellenlängenselektiv beschichteten Scheibe dahinterliegend angebrachte, rot abstrahlende LED ist als solche erkennbar. Die wellenlängenselektive Beschichtung 07 lässt die rote Strahlung durch.

Das Reflexionsverhalten der als Einzelschicht oder als Schichtstapel ausgeführten und/oder ausführbaren wellenlängenselektiven Beschichtung 07 ist in der Regel zumindest leicht blickwinkelabhängig. Ein zuvor beispielhaft als bläulich beschriebener Farbeffekt der wellenlängenselektiv beschichteten Scheibe und die Erscheinung des dahinterliegenden, beispielhaft als rot abstrahlende LED beschriebenen Objekts, verändert sich mit einer Änderung des Betrachtungswinkels und/oder der Betrachtungsrichtung farblich etwas. Aufgrund des Schichtaufbaus und der mit dem Blickwinkel sich verändernden Länge des Lichtwegs im für die Schicht verwendeten Material und/oder in den für die Schichten verwendeten Materialien ändert sich auch das Ergebnis durch den Schichtaufbau, dessen Dicke dann unter einem Betrachtungswinkel von beispielsweise 30° von der Seite nicht mehr so optimal ausgelegt ist, wie bei einem senkrecht auf die mit der wellenlängenselektiven Beschichtung 07 versehene Oberfläche gerichteten Betrachtungswinkel.

Beispielsweise kann eine Auslegung der wellenlängenselektiven Beschichtung 07 auf ein Viertel der Wellenlänge des beispielsweise zu reflektierenden ersten Wellenlängenbereichs bei einem senkrecht auf die mit der wellenlängenselektiven Beschichtung 07 versehene Oberfläche gerichteten Betrachtungswinkel exakt passen, wohingegen eine seitliche Einstrahlung den Lichtweg im Material der wellenlängenselektiven Beschichtung 07 verlängert, wodurch die Bedingung dann nicht mehr exakt gegeben ist.

Werden die Reflexions- und Transmissionsbänder entsprechend breit ausgelegt, so dass eine gewisse Blickwinkelabhängigkeit keine Einschränkung darstellt, ergibt sich aber auch der überraschende Vorteil, dass die zu erkennende Farbe der wellenlängenselektiven Schicht unter Tageslicht sich dynamisch leicht mit dem Blickwinkel ändert. Demnach schafft die Erfindung als überraschenden Nebeneffekt eine Vergrößerung des Gestaltungs- und Formgebungsspielraums für die Entwicklung von Leuchten allgemein und für Fahrzeugleuchte im Speziellen.

Die Wahl eines anderen Materials für die Einzelschicht oder ein Schichtstapel aus mehreren Schichten aus zumindest aneinandergrenzend jeweils unterschiedlichem Material erlaubt die Anpassung an einen oder mehrere Wellenlängenbereiche, so dass gezielt als Lichtfarben für Lichtfunktionen in Fahrzeugleuchten vorgeschriebene Wellenlängenbereiche an der wellenlängenselektiven Beschichtung 07 wahlweise transmittiert oder reflektiert werden.

Im ausgeschalteten Zustand erlaubt dies überraschende farbliche Effekte zu verwirklichen. Hierdurch kann die wellenlängenselektive Beschichtung bei der Bestrahlung mit natürlichem Tageslicht einen Farbeffekt aufweisen, beispielsweise indem sie in einer von einer Lichtfarbe der ersten und/oder der zweiten Lichtfunktion abweichenden Farbe zu schimmern scheint. Beispielsweise kann die wellenlängenselektive Beschichtung bei Bestrahlung beziehungsweise Beleuchtung mit natürlichem Tageslicht bläulich schimmernd ausgeführt sein. Wird nun innerhalb einer solchen beispielsweise bläulich schimmernden Fläche eine beispielsweise rote Brems- oder Schlusslichtfunktion, oder eine gelbe Wiederholblinklichtfunktion zur Fahrtrichtungsanzeige und/oder zur Warnung anderer Verkehrsteilnehmer ausgeführt, so stellt dies einen überraschenden Effekt mit den voranstehend geschilderten Vorteilen eines Beitrags zur Steigerung der Verkehrssicherheit dar.

Demnach schafft die Erfindung als überraschenden Nebeneffekt eine Vergrößerung des Gestaltungs- und Formgebungsspielraums für die Entwicklung von Leuchten allgemein und für Fahrzeugleuchte im Speziellen.

Eine vorteilhafte Ausgestaltung der Fahrzeugleuchte 01 sieht vor, dass die mindestens eine erste Lichtquelle 50 der Fahrzeugleuchte 01 zwischen der Lichtscheibe 02 und dem Reflektor 04 angeordnet ist, wie dies sowohl bei dem in Fig. 2 dargestellten Ausführungsbeispiel einer Fahrzeugleuchte 01, als auch bei dem in Fig. 3 dargestellten Ausführungsbeispiel einer Fahrzeugleuchte 01 der Fall ist.

Eine bevorzugte Weiterbildung der voranstehend beschriebenen Fahrzeugleuchte 01, bei der die mindestens eine erste Lichtquelle 50 der Fahrzeugleuchte 01 zwischen der Lichtscheibe 02 und dem Reflektor 04 angeordnet ist, sieht vor, dass die mindestens eine erste Lichtquelle 50 ihr Licht in einer im Wesentlichen parallel zur Lichtscheibe 02 verlaufenden Richtung in den Reflektor 04 einstrahlt, wie dies beim in Fig. 2 dargestellten Ausführungsbeispiel einer Fahrzeugleuchte 01 der Fall ist.

Eine vorteilhafte Weiterbildung der voranstehend beschriebenen Ausführungsbeispiele von Fahrzeugleuchten 01 sieht vor, dass die mindestens eine erste Lichtquelle 50 neben dem Reflektor 04 angeordnet ist, wie dies beim in Fig. 2 dargestellten Ausführungsbeispiel einer Fahrzeugleuchte 01 der Fall ist.

Eine alternative bevorzugte Weiterbildung der voranstehend beschriebenen Fahrzeugleuchte 01, bei der die mindestens eine erste Lichtquelle 50 der Fahrzeugleuchte 01 zwischen der Lichtscheibe 02 und dem Reflektor 04 angeordnet ist, sieht vor, dass die mindestens eine erste Lichtquelle 50 ihr Licht in einer im Wesentlichen senkrecht zur Lichtscheibe 02 verlaufenden Richtung in den Reflektor 04 einstrahlt, wie dies beim in Fig. 3 dargestellten Ausführungsbeispiel einer Fahrzeugleuchte 01 der Fall ist.

Der Reflektor 04 kann als mit der wellenlängenselektiven Beschichtung 07 versehener Optikkörper 42 ausgeführt sein, wie in Fig. 2 dargestellt. Der Optikkörper 42 trägt zur Lichtlenkung der von den zweiten Lichtquellen 60 ausgehenden Lichtstrahlen L2 und damit zur Lichtverteilung einer vermittels der zweiten Lichtquellen 60 verwirklichten Lichtfunktion der Fahrzeugleuchte 01 bei.

Wichtig ist hervorzuheben, dass der Reflektor 04 wie in Fig. 3 beispielhaft dargestellt eine mit der wellenlängenselektiven Beschichtung versehene Flächenlichtquelle 40 umfassen kann, beispielsweise eine auf einem zumindest für Licht in der Lichtfarbe der zweiten Lichtquelle 60 transparenten Substrat aufgebauten, transparenten OLED 41. Die transparente OLED 41 kann zur Erfüllung einer weiteren Lichtfunktion der Fahrzeugleuchte 01 dienen, oder sie kann einer der beiden Lichtfunktionen beitragen, die durch die mindestens eine erste Lichtquelle 50 oder durch die mindestens eine zweite Lichtquelle 60 erfüllt werden.

Alternativ oder zusätzlich kann die Flächenlichtquelle 40 einen Optikkörper 42 umfassen, der zusätzlich als Flächenlichtleiter ausgebildet ist. In diesen Flächenlichtleiter koppelt mindestens eine weitere Lichtquelle ihr Licht ein, welches dann vom Flächenlichtleiter durch die wellenlängenselektive Beschichtung 07 zur Lichtscheibe 02 hin abgestrahlt wird.

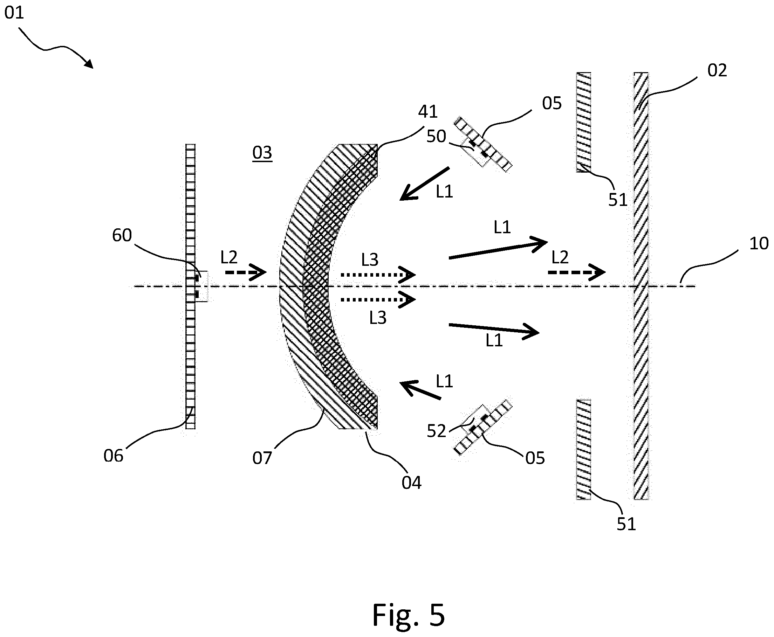

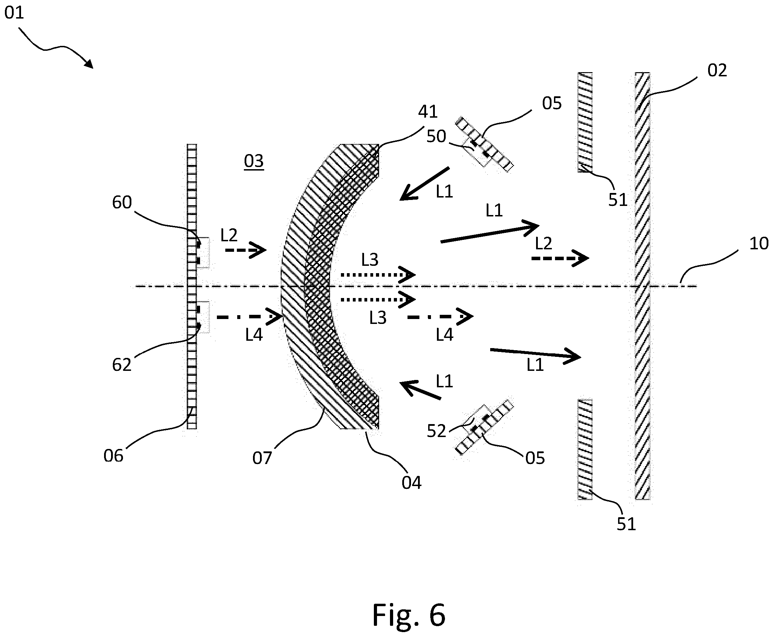

Fig. 5 und Fig. 6 zeigen Ausführungsbeispiele einer Fahrzeugleuchte 01 mit einer transparenten OLED 41, bei der mehr als zwei Lichtfunktionen innerhalb der selben, durch die Ansichtsfläche des Reflektors 04 beim Blick von außerhalb des Leuchteninnenraums 03 durch die Lichtscheibe 02 hindurch gebildeten Leuchtfläche verwirklicht werden.

Ausgewählte, von der transparenten OLED 41 ausgehende Lichtstrahlen L3 einer vom von der ersten OLED 41 abgestrahlten Wellenlängenbereich umfassten Lichtfarbe sind in Fig. 5 und Fig. 6 anhand mit punktierten Linien eingezeichneter Pfeile dargestellt.

Die Lichtfunktionen der Fahrzeugleuchte 01 werden entlang einer optischen Achse 10, unter einem Winkel zu dieser und/oder parallel zu dieser abgegeben.

Das den Leuchteninnenraum 03 gemeinsam mit der Lichtscheibe 02 ganz oder teilweise umgebende Leuchtengehäuse ist der Übersichtlichkeit halber nicht dargestellt, wie dies in Fig. 2 und Fig. 3 ebenfalls der Fall ist.

Bei den in Fig. 5 und Fig. 6 dargestellten Fahrzeugleuchten 01 umfasst das erste Leuchtmittel 05 mindestens zwei Lichtquellen, eine erste Lichtquelle 50 und eine weitere erste Lichtquelle 52. Ausgewählte Lichtstrahlen L1 der ersten Lichtquelle 50 und der weiteren ersten Lichtquelle 52 sind mit durchgezogenen Linien eingezeichneten Pfeilen dargestellt.

Eine Verwirklichung von drei Lichtfunktionen innerhalb der selben, durch die Ansichtsfläche des Reflektors 04 beim Blick von außerhalb des Leuchteninnenraums 03 durch die Lichtscheibe 02 hindurch gebildeten Leuchtfläche erlaubt eine in Fig. 5 dargestellte Fahrzeugleuchte 01.

Das zweite Leuchtmittel 06 der in Fig. 5 dargestellten Fahrzeugleuchte 01 umfasst eine zweite Lichtquelle 60. Ausgewählte, von der zweiten Lichtquelle 60 ausgehende Lichtstrahlen L2 sind in Fig. 5 und Fig. 6 mit gestrichelten Linien eingezeichneten Pfeilen dargestellt.

Gemäß einer ersten Ausgestaltung der in Fig. 5 dargestellten Fahrzeugleuchte 01 wird mittels einer Licht gelber Lichtfarbe abstrahlenden transparenten OLED 41 eine Wiederholblinklichtfunktion zur Fahrtrichtungsanzeige und/oder zur Warnung anderer Verkehrsteilnehmer zumindest zeitweilig erfüllt. Die Lichtfarbe der von der OLED 41 ausgehenden Lichtstrahlen L3 ist gelb.

Eine Rückfahrlichtfunktion weißer Lichtfarbe wird gemäß der ersten Ausgestaltung der in Fig. 5 dargestellten Fahrzeugleuchte 01 mit Hilfe der ersten Lichtquelle 50 und der weiteren ersten Lichtquelle 52 des ersten Leuchtmittels 05 zumindest zeitweilig verwirklicht. Die Lichtfarbe der von der ersten Lichtquelle 50 und der weiteren ersten Lichtquelle 52 ausgehenden Lichtstrahlen L1 ist in diesem Fall vorzugsweise weiß. Die weiße Lichtfarbe kann durch Mischung blauen und gelben Lichts erhalten werden, das von jeweils eigenen LED-Chips der ersten Lichtquelle 50 und der weiteren ersten Lichtquelle 52 abgegeben wird. Alternativ kann die weiße Lichtfarbe durch Mischung von blauer und gelber Strahlung erhalten werden, die von einem blauen oder UV emittierenden LED-Chip abgestrahlt wird und durch Lichtkonversion einer Schicht vor dem Chip einen Teil der Strahlung in gelbe Strahlung umwandelt, wodurch eine weiße Lichtfarbe entsteht, die von der ersten Lichtquelle 50 und der weiteren ersten Lichtquelle 52 des ersten Leuchtmittels 05 abgegeben wird. Dies kann beispielsweise durch Lichtkonversion mittels einer Phosphorschicht erfolgen.

Die Lichtstrahlen L1 der ersten Lichtquelle 50 und der weiteren ersten Lichtquelle 52 des ersten Leuchtmittels 05 werden an der wellenlängenselektiven Beschichtung 07 des die OLED 41 umfassenden Reflektors 04 zur Lichtscheibe 02 hin reflektiert.

Gleichzeitig besteht die Möglichkeit, in einer anderen Lichtfarbe durch die transparente OLED 41 hindurch zu leuchten.

Eine Schlusslichtfunktion roter Lichtfarbe wird gemäß der ersten Ausgestaltung der in Fig. 5 dargestellten Fahrzeugleuchte 01 mit Hilfe der zweiten Lichtquelle 60 des zweiten Leuchtmittels 06 zumindest zeitweilig verwirklicht. Die Lichtfarbe der von der zweiten Lichtquelle 60 ausgehenden Lichtstrahlen L2 ist in diesem Fall rot.

Die transparente OLED 41 ist hierzu rückseitig, auf ihrer der Lichtscheibe 02 abgewandten Seite, wenigstens zum Teil mit einer wellenlängenselektiven Beschichtung 07 versehen, die gemäß der ersten Ausgestaltung der in Fig. 5 dargestellten Fahrzeugleuchte 01 für Licht blauer und gelber Lichtfarbe reflektierend und für Licht roter Lichtfarbe transmittierend ist.

Gemäß einer zweiten Ausgestaltung der in Fig. 5 dargestellten Fahrzeugleuchte 01 wird mittels einer Licht roter Lichtfarbe abstrahlenden transparenten OLED 41 eine Schlusslichtfunktion zumindest zeitweilig erfüllt. Die Lichtfarbe der von der OLED 41 ausgehenden Lichtstrahlen L3 ist rot.

Eine Bremslichtfunktion roter Lichtfarbe wird gemäß der zweiten Ausgestaltung der in Fig. 5 dargestellten Fahrzeugleuchte 01 mit Hilfe der ersten Lichtquelle 50 und der weiteren ersten Lichtquelle 52 des ersten Leuchtmittels 05 zumindest zeitweilig verwirklicht. Die Lichtfarbe der von der ersten Lichtquelle 50 und der weiteren ersten Lichtquelle 52 ausgehenden Lichtstrahlen L1 ist in diesem Fall rot. Die Lichtstrahlen L1 der ersten Lichtquelle 50 und der weiteren ersten Lichtquelle 52 des ersten Leuchtmittels 05 werden an der wellenlängenselektiven Beschichtung 07 des die OLED 41 umfassenden Reflektors 04 zur Lichtscheibe 02 hin reflektiert.

Gleichzeitig besteht auch hier die Möglichkeit, in einer anderen Lichtfarbe durch die transparente OLED 41 hindurch zu leuchten.

Eine Rückfahrlichtfunktion weißer Lichtfarbe wird gemäß der zweiten Ausgestaltung der in Fig. 5 dargestellten Fahrzeugleuchte 01 mit Hilfe der zweiten Lichtquelle 60 des zweiten Leuchtmittels 06 zumindest zeitweilig verwirklicht. Die Lichtfarbe der von der zweiten Lichtquelle 60 ausgehenden Lichtstrahlen L2 ist in diesem Fall vorzugsweise weiß. Die weiße Lichtfarbe kann durch Mischung blauen und gelben Lichts erhalten werden, das von jeweils eigenen LED-Chips der zweiten Lichtquelle 60 abgegeben wird. Alternativ kann die weiße Lichtfarbe auch hier durch Mischung von blauer und gelber Strahlung erhalten werden, die von einem blauen oder UV emittierenden LED-Chip abgestrahlt wird und durch Lichtkonversion einer Schicht vor dem Chip einen Teil der Strahlung in gelbe Strahlung umwandelt, wodurch eine weiße Lichtfarbe entsteht, die von der zweiten Lichtquelle 60 des zweiten Leuchtmittels 06 abgegeben wird. Dies kann beispielsweise durch Lichtkonversion mittels einer Phosphorschicht erfolgen.

Die transparente OLED 41 ist hierzu rückseitig, auf ihrer der Lichtscheibe 02 abgewandten Seite, wenigstens zum Teil mit einer wellenlängenselektiven Beschichtung 07 versehen, die gemäß der zweiten Ausgestaltung der in Fig. 5 dargestellten Fahrzeugleuchte 01 für Licht blauer und gelber Lichtfarbe transmittierend und für Licht roter Lichtfarbe reflektierend ist.

Eine Verwirklichung von vier Lichtfunktionen innerhalb derselben, durch die Ansichtsfläche des Reflektors 04 beim Blick von außerhalb des Leuchteninnenraums 03 durch die Lichtscheibe 02 hindurch gebildeten Leuchtfläche erlaubt eine in Fig. 6 dargestellte Fahrzeugleuchte 01.

Bei der in Fig. 6 dargestellten Fahrzeugleuchte 01 umfasst das zweite Leuchtmittel 06 mindestens zwei Lichtquellen, eine zweite Lichtquelle 60 und eine weitere zweite Lichtquelle 62. Ausgewählte Lichtstrahlen L2 der zweiten Lichtquelle 60 sind mit gestrichelten Linien eingezeichneten Pfeilen dargestellt. Ausgewählte, von der weiteren zweiten Lichtquelle 62 ausgehende Lichtstrahlen L4 sind in Fig. 6 mit strichpunktierten Linien eingezeichneten Pfeilen dargestellt.

Gemäß einer Ausgestaltung der in Fig. 6 dargestellten Fahrzeugleuchte 01 wird mittels einer Licht roter Lichtfarbe abstrahlenden transparenten OLED 41 beispielsweise eine Schlusslichtfunktion zumindest zeitweilig erfüllt. Die Lichtfarbe der von der OLED 41 ausgehenden Lichtstrahlen L3 ist rot. Denkbare alternative mittels der OLED 41 zeitweilig erfüllbare Lichtfunktionen sind eine Parklichtfunktion oder eine Seitenmarkierungslichtfunktion.

Eine Nebelschlusslichtfunktion roter Lichtfarbe wird gemäß dieser Ausgestaltung der in Fig. 6 dargestellten Fahrzeugleuchte 01 mit Hilfe der ersten Lichtquelle 50 und der weiteren ersten Lichtquelle 52 des ersten Leuchtmittels 05 zumindest zeitweilig verwirklicht. Die Lichtfarbe der von der ersten Lichtquelle 50 und der weiteren ersten Lichtquelle 52 ausgehenden Lichtstrahlen L1 ist in diesem Fall rot. Die Lichtstrahlen L1 der ersten Lichtquelle 50 und der weiteren ersten Lichtquelle 52 des ersten Leuchtmittels 05 werden an der wellenlängenselektiven Beschichtung 07 des die OLED 41 umfassenden Reflektors 04 zur Lichtscheibe 02 hin reflektiert.

Gleichzeitig besteht wiederum die Möglichkeit, in einer anderen Lichtfarbe durch die transparente OLED 41 hindurch zu leuchten.

Eine Rückfahrlichtfunktion weißer Lichtfarbe wird gemäß dieser Ausgestaltung der in Fig. 6 dargestellten Fahrzeugleuchte 01 mit Hilfe der zweiten Lichtquelle 60 des zweiten Leuchtmittels 06 zumindest zeitweilig verwirklicht. Die Lichtfarbe der von der zweiten Lichtquelle 60 ausgehenden Lichtstrahlen L2 ist in diesem Fall weiß. Die weiße Lichtfarbe wird durch Mischung blauen und gelben Lichts erhalten, das von jeweils eigenen LED-Chips der zweiten Lichtquelle 60 abgegeben wird. Alternativ kann die weiße Lichtfarbe wiederum durch Mischung von blauer und gelber Strahlung erhalten werden, die von einem blauen oder UV emittierenden LED-Chip abgestrahlt wird und durch Lichtkonversion einer Schicht vor dem Chip einen Teil der Strahlung in gelbe Strahlung umwandelt, wodurch eine weiße Lichtfarbe entsteht, die von der zweiten Lichtquelle 60 des zweiten Leuchtmittels 06 abgegeben wird. Dies kann beispielsweise durch Lichtkonversion mittels einer Phosphorschicht erfolgen.

Die transparente OLED 41 ist hierzu rückseitig, auf ihrer der Lichtscheibe 02 abgewandten Seite, wenigstens zum Teil mit einer wellenlängenselektiven Beschichtung 07 versehen, die gemäß dieser Ausgestaltung der in Fig. 6 dargestellten Fahrzeugleuchte 01 für Licht blauer und gelber Lichtfarbe transmittierend und für Licht roter Lichtfarbe reflektierend ist.

Als vierte Lichtfunktion gemäß dieser Ausgestaltung der in Fig. 6 dargestellten Fahrzeugleuchte 01 wird eine Wiederholblinklichtfunktion zur Fahrtrichtungsanzeige und/oder zur Warnung anderer Verkehrsteilnehmer gelber Lichtfarbe mit Hilfe der weiteren zweiten Lichtquelle 62 des zweiten Leuchtmittels 06 zumindest zeitweilig verwirklicht. Die Lichtfarbe der von der weiteren zweiten Lichtquelle 62 ausgehenden Lichtstrahlen L4 ist in diesem Fall gelb.

Wichtig ist hervorzuheben, dass in dem Weg der Lichtausbreitung der von einer oder mehreren ersten Lichtquellen 50 und/oder einer oder mehreren weiteren ersten Lichtquellen 52 und/oder einer oder mehreren zweiten Lichtquellen 60 und/oder einer oder mehreren weiteren zweiten Lichtquellen 62 ausgehenden Lichtstrahlen L1, L2, L4 Optikelemente zur Lichtlenkung angeordnet sein können, um das Licht besser zu lenken. Beispielsweise können hierfür Vorsatzlinsen, lichtleitende Elemente oder beispielsweise aus Polymethylmethacrylat (PMMA) oder aus Polycarbonat (PC) hergestellte Einrichtungen zur Lichtlenkung, wie etwa so genannte Compound Parabolic Concentrator (CPC). In den Abbildungen sind diese der Übersicht halber nicht dargestellt.

Grundsätzlich kann das erste Leuchtmittel 05 der in Fig. 5 und in Fig. 6 dargestellten Fahrzeugleuchte 01 wie das zweite Leuchtmittel 06 in Fig. 6 auch mindestens zwei unabhängig voneinander betreibbare Lichtquellen umfassen. Hierbei handelt es sich um mindestens eine erste Lichtquelle 50 und um mindestens eine weitere erste Lichtquelle 52. Weisen diese unterschiedliche Lichtfarben auf, so kann eine weitere Lichtfunktion innerhalb derselben Leuchtfläche verwirklicht werden.

Ist die OLED 41 wie in Fig. 5 und Fig. 6 dargestellt rückseitig, also auf ihrer der Lichtscheibe 02 abgewandten Seite, mit der wellenlängenselektiven Beschichtung 07 versehen, so dass ihre abgestrahlte Lichtfarbe reflektiert wird, so erhöht sich ihr Wirkungsgrad erheblich, da das Licht, das sonst von der OLED 41 nach hinten abgestrahlt wird, auch für die Lichtfunktion genützt werden kann.

Dasselbe gilt für einen anstatt der OLED 41 vorgesehenen, als Flächenlichtleiter ausgebildeten Optikkörper 42, in welchen mindestens eine weitere Lichtquelle ihr Licht einkoppelt, welches dann vom Flächenlichtleiter abgestrahlt wird. Ist der Flächenlichtleiter rückseitig mit der wellenlängenselektiven Beschichtung 07 versehen, welche die von ihm abgestrahlte Lichtfarbe reflektiert, so steht auch das ansonsten rückseitig austretende Licht zur Erfüllung einer Lichtfunktion zur Verfügung.

Ebenfalls wichtig ist hervorzuheben, dass die OLED 41 auch so aufgebaut sein kann, dass sie mehrere Lichtfarben abstrahlen kann, beispielsweise Rot und Gelb oder Rot, Gelb und Blau. Hierdurch können die Kombinationsmöglichkeiten der Erfindung für Lichtsignalfunktionen nochmals erhöht werden insbesondere in Bezug auf die möglichen Ausgestaltungsformen und Gestaltungsfreiheiten in Leuchten. Zusätzlich können auch Kombinationen bei der Ansteuerung von mehreren Lichtquellen zu einer Anpassung der abgestrahlten Lichtstärke führen. Dies ist insbesondere vorteilhaft beispielsweise für die Kombination von Schluss- und Bremslichtfunktionen sowie für Mehrpegelleuchten, die beispielsweise in Abhängigkeit von der Umgebungshelligkeit ihre abgestrahlte Lichtstärke anpassen. Werden mehrere Lichtquellen gleicher Lichtfarbe in einer Leuchte eingesetzt, so erhöhen sich hierdurch die technischen und gestalterischen Möglichkeiten, da jede Lichtquelle nur endlich viel Licht abstrahlen kann. Auch sind unterschiedliche Signaturen beispielsweise für Schlusslichtfunktionen möglich, die beispielsweise bei der gleichzeitigen Aktivierung des Bremslichtes ihre geometrische Form ändern. Letzteres kann zu einer Verbesserung der Wahrnehmbarkeit der Lichtsignalfunktionen und zu einer verbesserten Reaktion der Verkehrsteilnehmer und damit einhergehend zu einer Erhöhung der Verkehrssicherheit führen.

Durch den Einsatz von segmentierten und/oder mehrfarbig abstrahlenden Lichtquellen, insbesondere beim Einsatz von OLEDs, können mit einer solchen Ausgestaltung in der Leuchtfläche etwa auch Symbole und/oder Animationen und/oder ähnliches gezeigt werden, die zu einer auch unter dem Begriff Car2X-Kommunikation Einzug in die Automobilwelt haltenden Kommunikationsmöglichkeit mit der Umwelt eingesetzt werden können.

Wie bereits erwähnt, kann mindestens ein Blendenelement 51 vorgesehen sein, welches wenigstens das erste Leuchtmittel 05 ganz oder teilweise, jedoch zumindest dessen mindestens eine erste Lichtquelle 50 vor den Blicken eines von außerhalb des Leuchteninnenraums 03 durch die Lichtscheibe 02 hindurch schauenden Betrachters mindestens teilweise verbirgt.

Das Blendenelement 51 kann Teil des ersten Leuchtmittels 05 sein, beispielsweise kann das Blendenelement 51 zugleich als Leiterbahnträger des ersten Leuchtmittels 05 ausgebildet sein.

Bei den in Fig. 5 und Fig. 6 dargestellten Ausführungsbeispielen einer Fahrzeugleuchte 01 verbirgt das mindestens eine Blendenelement 51 wenigstens das erste Leuchtmittel 05 ganz oder teilweise, jedoch zumindest dessen mindestens eine erste Lichtquelle 50 und zumindest dessen mindestens eine weitere erste Lichtquelle 52 vor den Blicken eines von außerhalb des Leuchteninnenraums 03 durch die Lichtscheibe 02 hindurch schauenden Betrachters wenigstens teilweise.

Besonders hervorzuhebende Vorteile gegenüber dem Stand der Technik sind:
- eine Unterstützung eines in der Fahrzeugbranche vorherrschenden Trends zum Erhalt kleinerer Leuchten,
- eine Einhaltung von Leichtbauzielen einhergehend mit einem geringeren Bauraumbedarf,
- eines Erhalts einer neuartigen Anmutung unter Schaffung neuer Formgestaltungsmöglichkeiten, sowie
- die Erzeugung eines Überraschungeffekts durch in deren ausgeschaltetem Zustand sowohl in Form, Farbe, als auch Größe unsichtbare Lichtfunktionen, die bei deren Aktivierung innerhalb einer bereits für eine andere Lichtfunktion verwendeten Leuchtfläche verwirklicht werden.

Die Erfindung ist besonders vorteilhaft insbesondere im Vergleich zu Ausführungsmöglichkeiten mit fluoreszierenden Materialien in Bezug auf folgende Aspekte:
- Im Vergleich zu fluoreszierenden Materialien ist die lichttechnische Effizienz deutlich erhöht.
- Das Licht kann einfacher und besser gerichtet sowie gelenkt werden.
- Es ergibt sich ein einfacherer Aufbau, insbesondere mit weniger Schichten, wenn eine transparente Lichtscheibe verwendet werden soll. Dies ist im Vergleich zu fluoreszierenden Materialien durch den Wegfall einer beispielsweise blaues und/oder grünes Licht und/oder UV-Strahlung abstrahlenden Anregungslichtquelle begründet, wie sie zur Anregung der fluoreszierenden Materialien erforderlich ist. Das zur Anregung fluoreszierender Materialien erforderliche Anregungslicht und/oder die Anregungsstrahlung muss ansonsten mit geeigneten Einrichtungen in der Leuchte abgeschirmt werden, so dass es von außerhalb der Leuchte nicht zu erkennen ist.

Die Ausführung ist mit einer transparenten Lichtscheibe ohne Einschränkungen umsetzbar. Es ist sogar sinnvoll eine transparente Lichtscheibe einzusetzen. Hierdurch lassen sich zusätzliche Farbgestaltungsmöglichkeiten verwirklichen, beispielsweise anhand des weiter oben beschriebenen beispielsweise blauen Schimmers des mit der wellenlängenselektiven Beschichtung 07 versehenen Teils des Reflektors 04 im Auszustand.

Hierdurch lässt sich beispielsweise eine neuartige, beispielsweise blau schimmernde Anmutung in der Leuchte erzeugen.

Es lassen sich mehrere Lichtfunktionen zusammenlegen und mit denselben Leuchtenkammern einer Leuchte verwirklichen.

Die Erfindung erweitert die Gestaltungsmöglichkeiten von optischen Systemen, die leuchtende optische Signaturen insbesondere in Fahrzeugleuchten darstellen sollen, erheblich.

Die Erfindung ist nicht durch die Beschreibung anhand der Ausführungsbeispiele beschränkt. Die Erfindung wird nur durch die beigelegte Ansprüche beschränkt.

Die Erfindung ist insbesondere im Bereich der Herstellung von Fahrzeugleuchten, insbesondere Kraftfahrzeugleuchten gewerblich anwendbar.

Die Erfindung wurde unter Bezugnahme auf bevorzugte Ausführungsformen beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 01: Fahrzeugleuchte
- 02: Lichtscheibe
- 03: Leuchteninnenraum
- 04: Reflektor
- 05: erstes Leuchtmittel
- 06: zweites Leuchtmittel
- 07: wellenlängenselektive Beschichtung
- 10: optische Achse
- 40: Flächenlichtquelle
- 41: OLED
- 42: Optikkörper
- 50: erste Lichtquelle
- 51: Blendenelement
- 52: weitere erste Lichtquelle
- 60: zweite Lichtquelle
- 62: weitere zweite Lichtquelle

- A: Absorption
- L1: Lichtstrahlen der Lichtfarbe der ersten Lichtquelle(n) (Lichtstrahlen einer Lichtfarbe eines von einer ersten Lichtquelle abgestrahlten ersten Wellenlängenbereichs)
- L2: Lichtstrahlen der Lichtfarbe der zweiten Lichtquelle(n) (Lichtstrahlen einer Lichtfarbe eines von einer zweiten Lichtquelle abgestrahlten zweiten Wellenlängenbereichs)
- R: Reflexion
- s: Polarisationskomponente des Lichts
- T: Transmission
- p: Polarisationskomponente des Lichts

- λ: Wellenlänge des Lichts
- λ / nm: Wellenlänge des Lichts in Nanometern

## Patentansprüche

1. Fahrzeugleuchte (01) mit einem von einem Leuchtengehäuse mit einer Lichtöffnung und einer diese zumindest teilweise verschließenden Lichtscheibe (02) wenigstens zum Teil umschlossenen Leuchteninnenraum (03), welcher einen Reflektor (04) sowie mindestens eine Licht (L1) eines ersten Wellenlängenbereichs abstrahlende erste Lichtquelle (50) und mindestens eine Licht (L2) eines zweiten Wellenlängenbereichs abstrahlende zweite Lichtquelle (60) beherbergt, wobei:
- der Reflektor (04) zumindest zum Teil mit einer wellenlängenselektiven Beschichtung (07) versehen ist, die für das Licht (L1) des ersten Wellenlängenbereichs reflektierend und für das Licht (L2) des zweiten Wellenlängenbereichs transparent ausgeführt ist,
- die erste Lichtquelle (50) ihr Licht (L1) in den Reflektor (04) einstrahlt, welcher das Licht (L1) der ersten Lichtquelle (50) zur Lichtscheibe (02) hin umlenkt,
- die zweite Lichtquelle (60) beim Blick durch die Lichtscheibe (02) auf den Reflektor (04) gesehen hinter dem Reflektor (04) angeordnet ist, und
- die zweite Lichtquelle (60) ihr Licht (L2) zur Lichtscheibe (02) hin zumindest durch den mit der wellenlängenselektiven Beschichtung (07) versehen Teil des Reflektors (04) hindurchstrahlt,
**dadurch gekennzeichnet, dass** ein eine zusammenhängende Teilfläche umfassender Teil des Reflektors (04) mit der wellenlängenselektiven Beschichtung (07) versehen ist und/oder ein mehrere unabhängige Teilflächen umfassender Teil des Reflektors (04) mit der wellenlängenselektiven Beschichtung (07) versehen ist, wobei der verbleibende, frei von der wellenlängenselektiven Beschichtung (07) ausgeführte Teil des Reflektors (04) mit einer Verspiegelung versehen ist.

2. Fahrzeugleuchte nach Anspruch 1, wobei die wellenlängenselektive Beschichtung (07) eine oder mehrere Schichten umfasst.

3. Fahrzeugleuchte nach Anspruch 1 oder 2, wobei die wellenlängenselektive Beschichtung (07) zumindest bei einer Bestrahlung mit natürlichem Tageslicht einen Farbeffekt aufweist.

4. Fahrzeugleuchte nach einem der voranstehenden Ansprüche, wobei die erste Lichtquelle (50) zwischen der Lichtscheibe (02) und dem Reflektor (04) angeordnet ist.

5. Fahrzeugleuchte nach Anspruch 4, wobei die erste Lichtquelle (50) ihr Licht in einer im Wesentlichen parallel zur Lichtscheibe (02) verlaufenden Richtung in den Reflektor (04) einstrahlt.

6. Fahrzeugleuchte nach Anspruch 4, wobei die erste Lichtquelle (50) ihr Licht in einer im Wesentlichen senkrecht zur Lichtscheibe (02) verlaufenden Richtung in den Reflektor (04) einstrahlt.

7. Fahrzeugleuchte nach einem der Ansprüche 1 bis 5, wobei die erste Lichtquelle (50) neben dem Reflektor (04) angeordnet ist.

8. Fahrzeugleuchte nach einem der voranstehenden Ansprüche, wobei der Reflektor (04) als ein Optikkörper (42) ausgeführt ist.

9. Fahrzeugleuchte nach Anspruch 8, wobei der Optikkörper (42) zur Lichtlenkung des von der zweiten Lichtquelle (60) ausgehenden Lichts (L2) beiträgt.

10. Fahrzeugleuchte nach einem der voranstehenden Ansprüche, wobei der Reflektor (04) eine Flächenlichtquelle (40) umfasst.

11. Fahrzeugleuchte nach Anspruch 10, wobei die Flächenlichtquelle (40) eine auf einem zumindest für Licht in der Lichtfarbe der zweiten Lichtquelle (60) transparenten Substrat aufgebaute OLED 41 umfasst.

12. Fahrzeugleuchte nach einem der voranstehenden Ansprüche, wobei sie ein Blendenelement (51) umfasst, welches die erste Lichtquelle (50) vor den Blicken eines von außerhalb des Leuchteninnenraums (03) durch die Lichtscheibe (02) hindurch schauenden Betrachters mindestens zum Teil verbirgt.

## Claims

1. A vehicle lamp (01), with a lamp interior (03) that is at least partly enclosed by a lamp housing with a light opening and a light lens (02) at least partly closing the light opening, which lamp interior (03) accommodates a reflector (04) as well as at least one first light source (50) emitting light (L1) of a first wavelength range and at least one second light source (60) emitting light (L2) of a second wavelength range, wherein:
- the reflector (04) is at least partly provided with a wavelength-selective coating (07), which is designed to be reflective for the light (L1) of the first wavelength range and transparent for the light (L2) of the second wavelength range,
- the first light source (50) irradiates its light (L1) into the reflector (04), which deflects the light (L1) of the first light source (50) towards the light lens (02),
- the second light source (60) is arranged behind the reflector, (04) as seen looking through the light lens (02) to the reflector (04), and
- the second light source (60) radiates its light (L2) towards the light lens (02) at least through the part of the reflector (04) that is provided with the wavelength-selective coating (07),
**characterised in that** a part of the reflector (04) comprising a continuous partial surface of the reflector (04) is provided with the wavelength-selective coating (07) and/or a part of the reflector (04) comprising a plurality of independent partial surfaces of the reflector (04) is provided with the wavelength-selective (07) coating, wherein the remaining part of the reflector (04) that is designed free from the wavelength-selective coating (07) is provided with a reflective coating.

2. The vehicle lamp according to claim 1, wherein the wavelength-selective coating (07) comprises one or more layers.

3. The vehicle lamp according to claim 1 or 2, wherein the wavelength-selective coating (07) at least under radiation with natural daylight has a colour effect.

4. The vehicle lamp according to one of the previous claims, wherein the first light source (50) is arranged between the light lens (02) and the reflector (04).

5. The vehicle lamp according to claim 4, wherein the first light source (50) irradiates its light into the reflector (04) in a direction extending essentially parallel to the light lens (02).

6. The vehicle lamp according to claim 4, wherein the first light source (50) irradiates its light into the reflector (04) in a direction extending essentially perpendicular to the light lens (02).

7. The vehicle lamp according to one of the claims 1 to 5, wherein the first light source (50) is arranged next to the reflector (04).

8. The vehicle lamp according to one of the previous claims, wherein the reflector (04) is designed as an optical body (42).

9. The vehicle lamp according to claim 8, wherein the optical body (42) contributes to the light guidance of the light (L2) emanating from the second light source (60).

10. The vehicle lamp according to one of the previous claims, wherein the reflector (04) comprises an area light source (40).

11. The vehicle lamp according to claim 10, wherein the area light source (40) comprises an OLED (41) built on a substrate that is transparent at least for light in the light colour of the second light source (60).

12. The vehicle lamp according to one of the previous claims, wherein the vehicle lamp comprises a cover element (51), which at least partly hides the first light source (50) from the view of an observer looking through the light lens (02) from outside the lamp interior (03).

## Revendications

1. Phare de véhicule (01) doté d'un espace intérieur de phare (03) entouré au moins partiellement d'un boîtier de phare pourvu d'une ouverture d'éclairage et d'une glace de diffusion (02) la fermant au moins partiellement, lequel espace intérieur de phare abrite un réflecteur (04) ainsi qu'au moins une première source lumineuse (50) réfléchissant de la lumière (L1) d'une première zone de longueurs d'ondes et au moins une deuxième source de lumière (60) réfléchissant de la lumière (L2) d'une deuxième zone de longueurs d'ondes :
- ledit réflecteur (04) étant pourvu au moins partiellement d'un revêtement de sélection de longueur d'onde (07) qui est réalisé de sorte à refléter la lumière (L1) de la première zone de longueurs d'ondes et à laisser passer la lumière (L2) de la deuxième zone de longueurs d'ondes,
- la première source lumineuse (50) rayonnant sa lumière (L1) dans le réflecteur (04) qui dévie la lumière (L1) de la première source lumineuse (50) vers la glace de diffusion (02),
- la deuxième source lumineuse (60) étant, lorsqu'on regarde le réflecteur (04) à travers la glace de diffusion (02), agencée derrière le réflecteur (04), et
- la deuxième source lumineuse (60) rayonnant sa lumière (L2) en direction de la glace de diffusion (02) au moins en traversant la partie du réflecteur (04) pourvu du revêtement de sélection de longueurs d'ondes (07),
**caractérisé en ce qu'**une partie du réflecteur (04) comprenant une surface partielle continue est pourvu dudit revêtement de sélection de longueurs d'ondes (07), et/ou une partie du réflecteur (04) comprenant plusieurs surfaces partielles indépendantes est pourvu dudit revêtement de sélection de longueurs d'ondes (07), la partie du réflecteur (04) restante et exempte dudit revêtement de sélection de longueurs d'onde (07) étant pourvue d'un revêtement de réflection.

2. Phare de véhicule selon la revendication 1, le revêtement de sélection de longueurs d'ondes (07) comprenant une ou plusieurs couches.

3. Phare de véhicule selon la revendication 1 ou 2, le revêtement de sélection de longueurs d'ondes (07) présentant un effet de couleur, au moins lorsqu'il est exposé à la lumière naturelle du jour.

4. Phare de véhicule selon l'une quelconque des revendications précédentes, la première source lumineuse (50) étant agencée entre la glace de diffusion (02) et le réflecteur (04).

5. Phare de véhicule selon la revendication 4, la première source lumineuse (50) rayonnant sa lumière dans le réflecteur (04) dans une direction sensiblement parallèle à la glace de diffusion (02).

6. Phare de véhicule selon la revendication 4, la première source lumineuse (50) rayonnant sa lumière dans le réflecteur (04) dans une direction sensiblement perpendiculaire à la glace de diffusion (02).

7. Phare de véhicule selon l'une quelconque des revendications 1 à 5, la première source lumineuse (50) étant agencée à côté du réflecteur (04).

8. Phare de véhicule selon l'une quelconque des revendications précédentes, le réflecteur (04) étant réalisé en tant que corps optique (42).

9. Phare de véhicule selon la revendication 8, ledit corps optique (42) contribuant à dévier la lumière (L2) émanant de la deuxième source lumineuse (60).

10. Phare de véhicule selon l'une quelconque des revendications précédentes, le réflecteur (04) comprenant une source lumineuse de surface (40)

11. Phare de véhicule selon la revendication 10, ladite source lumineuse de surface (40) comprenant une diode électroluminescente organique (41) constituée sur un substrat laissant passer au moins la lumière de couleur de la deuxième source lumineuse (60).

12. Phare de véhicule selon l'une quelconque des revendications précédentes, comprenant au moins un élément d'occultation (51) qui dissimule au moins partiellement la première source lumineuse (50) aux regards d'un observateur regardant à travers la glace de diffusion (02) depuis l'extérieur de l'espace intérieur du phare (03).
